# EUROPÄISCHE PATENTSCHRIFT

(11) **EP 1 306 584 B1**
(45) Veröffentlichungstag und Bekanntmachung des Hinweises auf die Patenterteilung: **24.01.2007**
(21) Anmeldenummer: 02018437.0
(22) Anmeldetag: 16.08.2002
(51) Int. Cl.: F16J 1/00

(54) **Komplett-Kolben**
Complete piston
Piston complet

(30) Priorität: 23.10.2001 DE 10151542
(43) Veröffentlichungstag der Anmeldung: 02.05.2003
(73) Patentinhaber: Carl Freudenberg KG, 69469 Weinheim (DE)
(72) Erfinder: Hermann, Armin, 34613 Schalmstadt (DE); Jäckel, Jürgen, 34637 Schrecksbach (DE)

(56) Entgegenhaltungen:
- DE-A- 19 754 700
- DE-B- 1 119 611
- GB-A- 752 324
- GB-A- 2 045 389
- US-A- 3 136 228
- US-A- 3 563 557
- US-A- 3 576 153
- US-A- 5 813 313
- PATENT ABSTRACTS OF JAPAN vol. 010, no. 385 (M-548), 24. Dezember 1986 (1986-12-24) & JP 61 175328 A (YAMAKAWA KOGYO KK), 7. August 1986 (1986-08-07)

## Beschreibung

### Technisches Gebiet

Die Erfindung betrifft einen Komplett-Kolben.

### Stand der Technik

Beispielsweise sind aus dem Katalog "Simrit Dichtungs- und Schwingungstechnik, Ausgabe 2000", Seite 29 Komplett-Kolben TDuo P bekannt. Dieser Komplett-Kolben weist einen Tragkörper aus Stahl und einen aufvulkanisierten Dichtring auf. Der Kolben ist doppelseitig druckbeaufschlagbar und mit integrierter Führung, wobei sich der Kolben auf der Kolbenstange ohne zusätzliche Dichtelemente befestigen läßt. Der Dichtring ist aus NBR-Kautschuk und weist eine Härte von etwa 72 Shore A auf. Der Kolben ist zum Abdichten von Druckluft vorgesehen und dichtet in einem Bereich von maximal 12 bar bei einer Temperatur von -20° C bis +100°C ausgezeichnet ab.

Aus US-A-3 576 153 ist ein Komplett-Kolben bekannt, welcher die Merkmale des Oberbegriffs des Patentanspruchs 1 aufweist.

Der Erfindung liegt die Aufgabe zugrunde, einen Komplett-Kolben des im einleitenden Teil des Patentanspruchs angegebenen Art bereitzustellen, bei welcher auch Dichtringe eingesetzt werden können, die trotz Beaufschlagung mit Temperaturen im Bereich von etwa 120 °C und Drücken von etwa 10 bar nur geringen mechanischen Belastungen ausgesetzt sind und dadurch gleichbleibend gute Gebrauchseigenschaften während einer langen Gebrauchsdauer aufweisen.

Diese Aufgabe wird erfindungsgemäß mit den Merkmalen von Anspruch 1 gelöst. Auf vorteilhafte Ausgestaltungen nehmen die Unteransprüche Bezug.

Durch den Stützvorsprung und den am Stützvorsprung abgestützten Dichtring bei der erfindungsgemäßen Auslegung ist der Dichtring auch bei Temperaturbeaufschlagung im Bereich von 120°C und/oder einer Druckbeaufschlagung von etwa 10 bar nur geringen mechanischen Belastungen ausgesetzt, insbesondere Zug-, Biege- und Schubbelastungen. Hierdurch weist der Dichtring und der Komplett-Kolben gleichbleibend gute Gebrauchseigenschaften während einer langen Gebrauchsdauer auf. Dichtring-Werkstoffe, die unter den zuvorgenannten Bedingungen bezüglich Temperatur und Druck gut einsetzbar sind, weisen im Vergleich zu Standardwerkstoffen, wie beispielsweise Polyurethan, eine vielfach geringere Festigkeit auf, so dass es einer besonderen Abstützung von Dichtringen aus derartigen Dichtring-Werkstoffen bedarf. Besonders Dichtringe, mit einer im Wesentlichen C-förmigen, axial in Richtung des abzudichtenden Raums offenen Nut sind bei Druck- und/oder Temperaturbeaufschlagung hinsichtlich mechanischer Belastungen besonders empfindlich, so dass es gerade bei einer solchen Ausgestaltung besonders wichtig ist, eine gute Abstützung des Dichtrings zu gewährleisten, um eine Beschädigung und/oder Zerstörung des Dichtrings und dadurch einen Ausfall des Komplett-Kolbens zu vermeiden.

Um die Biege-Belastung der am abzudichtenden Maschinenelement anliegenden Dichtlippe bei der erfindungsgemäßen Auslegung möglichst weitgehend zu reduzieren, weist die radiale Begrenzung des Stützvorsprungs einen ersten radialen Abstand von der Achse des Kolbens auf, wobei der erste radiale Abstand so groß ist, wie ein zweiter radialer Abstand zwischen der Achse und einer gedachten Ebene, die sich parallel zu der Achse erstreckt und in der radialen Mitte der Nut verläuft. In jedem Fall muß sichergestellt sein, dass der Dichtring auf der druckabgewandten Seite durch den Stützvorsprung gut abgestützt ist. Eine gute Abstützung liegt dann vor, wenn die zuvor genannten Bedingungen erfüllt sind.

Die Kerbwirkung innerhalb des Nutgrunds wird durch die beanspruchten radialen Abstände der radialen Begrenzung des Stützvorsprungs und der gedachten Ebene auf ein Minimum begrenzt.

Eine weitere Reduzierung der Kerbwirkung an der Oberfläche des Dichtrings kann dadurch erzielt werden, das die dem abzudichtenden Raum axial abgewandte Seite des Dichtrings, radial außerhalb des Stützvorsprungs, im Wesentlichen S-förmig, mit einem axial in Richtung des abzudichtenden Raums an den Stützvorsprung angrenzenden ersten und einem zum ersten radial versetzten zweiten Bogen ausgebildet ist. Die dem abzudichtenden Raum abgewandte Seite des Dichtrings ist dadurch frei von sprunghaften Richtungsänderungen. Die Richtungsänderungen im Bereich der Oberfläche des Dichtrings sind möglichst weich und mit großen Radien ausgeführt.

Der Dichtring kann radial außerhalb des Stützvorsprungs eine im Wesentlichen konstante Materialdicke aufweisen. Dadurch ist dieser Bereich konstanter Materialdicke auch bei Druck und/oder Temperaturbeaufschlagung gleichmäßigen mechanischen Belastungen ausgesetzt. Unter diesen Betriebsbedingungen nachteiliger sind beispielsweise Dichtringe mit einer Verstärkung/einem Außenrücken im Bereich der Anbindung der Dichtlippe, die an einem Stützkörper abgestützt wird und dadurch als Widerlager und Drehpunkt wirkt. Daraus resultieren unerwünscht hohe Biegebelastungen auf die Dichtlippe, die zu einem Reißen im Bereich der Anbindung der Dichtlippe/im Bereich des Nutgrunds führen.

Eine ausreichende Nachgiebigkeit, radial im Bereich der in axialer Richtung C-förmig offenen Nut, ist für eine geringe mechanische Belastung des Dichtrings sehr vorteilhaft. Das Verhältnis aus Radius der Nut zum Radius des ersten Bogens kann 0,75 bis 1,75 betragen. Dadurch ist im Bereich der Nut und des ersten Bogens die Kerbwirkung im Wesentlichen gleichmäßig gering und die Flexibilität gleich groß.

Der Tragkörper kann aus einem metallischen Werkstoff bestehen. Derartige Tragkörper sind einfach und kostengünstig herstellbar, wobei abweichend davon auch Tragkörper aus polymeren oder keramischen Werkstoffen zur Anwendung gelangen können.

Der Dichtring besteht bevorzugt aus einem Fluor-Polymer (FPM) oder einem hydrierten Nitril-Butadien-Kautschuk (HNBR).

Im Gegensatz zu Polyurethan weisen solche Werkstoffe eine ausgezeichnete Warmfestigkeit und eine gute Chemikalienbeständigkeit auf und sind daher für eine Beaufschlagung mit Temperaturen im Bereich von etwa 120°C und/oder Drücken im Bereich von etwa 10 bar besonders geeignet, wobei diese Bereiche für die meisten Anwendungsfälle vollkommen ausreichend sind. Die im Vergleich zu Polyurethan geringere Festigkeit wird durch die erfindungsgemäße Ausgestaltung des Komplett-Kolbens überkompensiert.

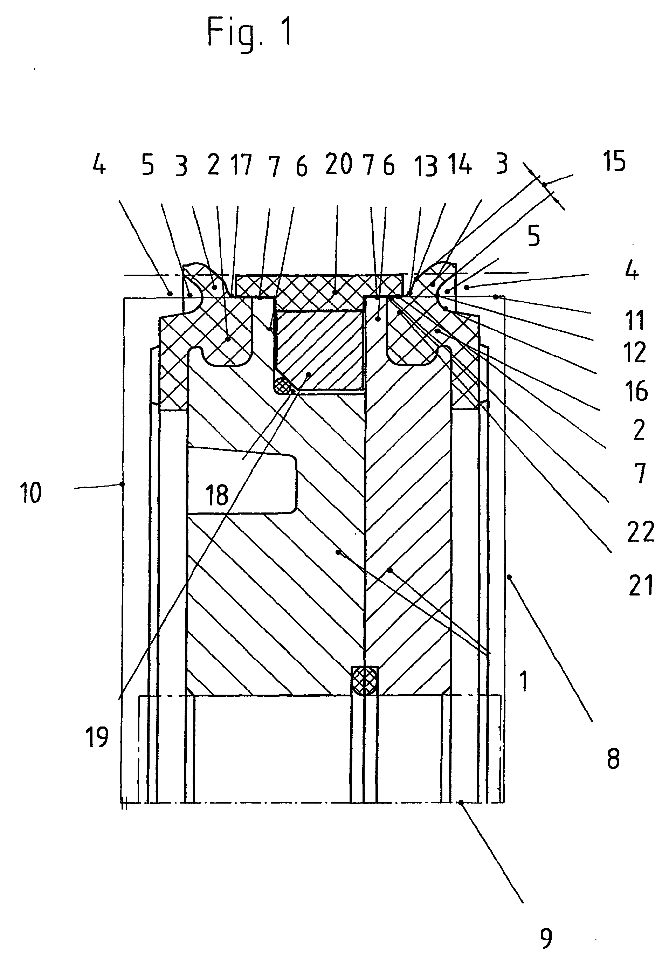

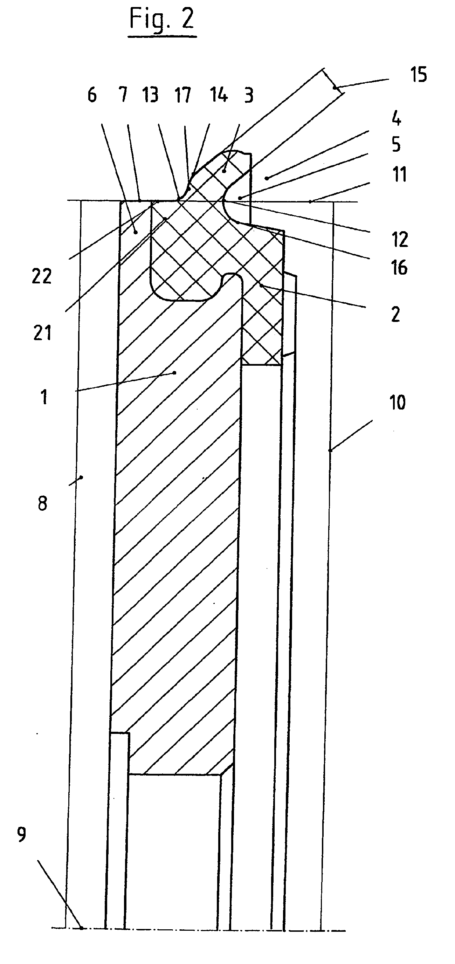

Der Tragkörper und der Dichtring sind bevorzugt stoffschlüssig miteinander verbunden. Die beiden Teile können miteinander verklebt oder vulkanisiert sein. Speziell für die Vulkanisierung sind Tragkörper aus metallischen Werkstoffen besonders vorteilhaft, da sie eine ausgezeichnete haltbare Verbindung zum Dichtring eingehen. Ein Ausführungsbeispiel des erfindungsgemäßen Komplett-Kolbens wird nachfolgend anhand der Figuren 1 und 2 näher erläutert. Diese zeigen jeweils in schematischer Darstellung:
Fig. 1 ein Ausführungsbeispiel eines Komplett-Kolbens
Fig. 2 das Einzelteil "Z" aus Fig. 1 in stark vergrößerter Darstellung

### Kurzbeschreibung der Zeichnungen

In Fig. 1 ist ein Ausführungsbeispiel eines Komplett-Kolbens gezeigt, der im Bereich Pneumatik zur Anwendung gelangt. Der Komplett-Kolben umfasst einen zweiteilig ausgebildeten Tragkörper 1 aus metallischem Werkstoff und zwei Dichtringe 2, die als Gleichteile ausgebildet und spiegelbildlich zueinander angeordnet sind. In axialer Richtung zwischen den Dichtringen 2 ist in einer Ausnehmung 18 des Tragkörpers 1 ein Magnet 19 angeordnet, durch den die axiale Position des Kolbens innerhalb eines hier nicht dargestellten Zylinders detektiert werden kann. Radial außenseitig ist der Magnet 19 von einem Führungsring 20 umschlossen. Der Führungsring 20 ist zur Führung des Kolbens innerhalb des Zylinders vorgesehen. Dadurch, dass sich der Führungsring 20 über die gesamte axiale Ausdehnung zwischen den beiderseits stirnseitig angeordneten Dichtlippen 3 erstreckt, verhindert er bei Druckbeaufschlagung des Kolbens auch dessen Verkantung innerhalb des Zylinders. Die Dichtringe 2 bestehen aus FPM oder HNBR.

In Fig. 2 ist der Ausschnitt "Z" aus Fig. 1 in vergrößerter Darstellung gezeigt. Der Dichtring 2 weist eine Dichtlippe 3 auf, die - im Längsschnitt betrachtet - eine im Wesentlichen C-förmige, axial in Richtung des abzudichtenden Raums 4 offene Nut 5 aufweist. Die Nut 5 ist in diesem Ausführungsbeispiel radial außenseitig von der Dichtlippe 3 begrenzt, die in Richtung des axial angrenzenden, abzudichtenden Raums 4 vorgewölbt ist. Auf der dem abzudichtenden Raum 4 abgewandten Seite der Nut 5 weist der Dichtring 2 einen Stützwulst 21 auf, dessen radiale Begrenzung 22, in radialer Richtung betrachtet bündig, mit der radialen Begrenzung 7 des Stützvorsprungs 6 und der Ebene 11 abschließt. Ebenso, wie die radiale Begrenzung 7 des Stützvorsprungs 6 weist auch die radiale Begrenzung 22 des Stützwulstes 21 den ersten radialen Abstand 8 von der Achse 9 auf. Bei Druckbeaufschlagung des abzudichtenden Raums 4 legt sich die Dichtlippe 3 mit verstärktem Druck an die hier nicht dargestellte innere Begrenzungswand eines Zylinders an und dichtet demgegenüber ab. Um die mechanischen Belastungen auf den Dichtring 2 so gering wie möglich zu halten, ist der Dichtring, radial außerhalb des Dichtvorsprungs 6, vom Stützwulst 21 bis zur radial äußeren Begrenzung der Dichtlippe 3 im Wesentlichen S-förmig mit einem axial in Richtung des abzudichtenden Raums 4 sich erstreckenden ersten 13 und einen zum ersten 13 radial versetzten zweiten Bogen 14 ausgebildet. Die Bögen 13, 14 gehen weich, ohne sprunghafte Richtungsänderungen ineinander über, wobei die gesamte Dichtlippe 3 im Wesentlichen eine konstante Materialdicke 15 aufweist.

Bei Druckbeaufschlagung ist die Dichtlippe 2 besonders im Nutgrund der Nut 5 und im Bereich des ersten Bogens 13, in dem dieser in den Stützwulst 21 übergeht, belastet. Das Verhältnis aus Radius 16 der Nut 5 zu Radius 17 des ersten Bogens 13 beträgt in dem hier gezeigten Ausführungsbeispiel etwa 1,2 wobei die Radien 16, 17 abhängig von der Größe des Komplett-Kolbens, bei gängigen Größen etwa 0,4 bis 1,5 mm betragen.

Der zweite Bogen 14, der sich in Richtung des abzudichtenden Raums 4 an den ersten Bogen 13 anschließt, weist einen Radius auf, der größer als die Radien 16, 17 von Nut 5 und erstem Bogen 13 ist.

## Patentansprüche

1. Komplett-Kolben mit einem Tragkörper (1) und einem Dichtring (2) mit zumindest einer Dichtlippe (3), und welcher femer folgendes aufweist:
- der Tragkörper (1) und der Dichtring (2) sind miteinander verbunden.
- der Dichtring (2) bildet jeweils im Längsschnitt des Kolbens betrachtet eine im Wesentlichen C-förmige, axial in Richtung des abzudichtenden Raums (4) offene Nut (5), und
- der Tragkörper (1) weist einen Stützvorsprung (6) in Form einer radial nach außen sich erstreckenden ringförmigen Fläche zur Stützung des Dichtringes (2) auf, **dadurch gekennzeichnet, dass** der Stützvorsprung (6) eine radiale Begrenzung (7) aufweist, die von der Achse (9) des Kolbens einen ersten radialen Abstand (8) aufweist, der erste radiale Abstand (8) gleich groß wie ein zweiter radialer Abstand (10) zwischen der Achse (9) und einer gedachten Ebene (11) ist, die parallel zu der Achse (9) durch die radiale Mitte (12) der Nut (5) verläuft, der Dichtring (2) auf der dem abzudichtenden Raum (4) abgewandten Seite der Nut (5) einen Stützwulst (21) aufweist, dessen radiale Begrenzung (22) in radialer Richtung betrachtet bündig mit der radialen Begrenzung (7) des Stützvorsprungs (6) und der gedachten Ebene (11) abschließt, und dass die radiale Begrenzung (22) des Stützwulstes (1) wie die radiale Begrenzung (7) des Stützvorsprungs (6) den ersten radialen Abstand (8) von der Achse (9) aufweist.

2. Kolben nach Anspruch 1, **dadurch gekennzeichnet, dass** die dem abzudichtenden Raum (4) axial abgewandte Seite des Dichtrings (2), radial außerhalb des Stützvorsprungs (6), im Wesentlichen S-förmig, mit einem axial in Richtung des abzudichtenden Raums (4) an den Stützvorsprung (6) angrenzenden ersten (13) und einem zum ersten (13) radial versetzten zweiten Bogen (14) ausgebildet ist.

3. Kolben nach einem der Ansprüche 1 oder 2, **dadurch gekennzeichnet, dass** die dem abzudichtenden Raum (4) abgewandte Seite des Dichtrings (2) frei von sprunghaften Richtungsänderungen ist.

4. Kolben nach einem der Ansprüche 1 bis 3, **dadurch gekennzeichnet, dass** der Dichtring (2) radial außerhalb des Stützvorsprungs (6) eine im wesentlichen konstante Materialdicke (15) aufweist.

5. Kolben nach einem der Ansprüche 1 bis 4 **dadurch gekennzeichnet, dass** das Verhältnis aus Radius (16) der Nut (5) zu Radius (17) des ersten Bogens (13) 0,75 bis 1,75 beträgt.

6. Kolben nach Anspruch 5, **dadurch gekennzeichnet, dass** das Verhältnis im Wesentlichen 1 beträgt.

7. Kolben nach einem der Ansprüche 1 bis 6, **dadurch gekennzeichnet, dass** der Traggkörper (1) aus einem metallischen Werkstoff besteht.

8. Kolben nach einem der Ansprüche 1 bis 7, **dadurch gekennzeichnet, dass** der Dichtring (2) aus einem polymeren Werkstoff besteht.

9. Kolben nach einem der Ansprüche 1 bis 8, **dadurch gekennzeichnet, dass** der Tragkörper (1) und der Dichtring (2) stoffschlüssig verbunden sind.

## Claims

1. Complete piston with a supporting element (1) and a seal ring (2) with at least one sealing lip (3), and with the following further features:
- the supporting element (1) and the seal ring (2) are joined together,
- the seal ring (2) forms an essentially C-shaped open groove (5) axially in the direction of the chamber to be sealed (4) as seen in each case in the longitudinal section of the piston, and
- the supporting element (1) has a supporting projection (6) in the form of an annular surface extending radially outwards in order to support the seal ring, **characterized in that** the supporting projection (6) has a radial limitation (7) that has a first radial distance (8) from the axis (9) of the piston, said first radial distance (8) being equal to a second radial distance (10) between the axis (9) and an imaginary plane (11) running parallel to the axis (9) through the radial centre line (12) of the groove (5), the seal ring (2) on the side of the groove (5) facing towards the chamber to be sealed (4) having a supporting bead (21) whose radial limitation (22) seen in radial direction ends flush with the radial limitation (7) of the supporting projection (6) and the imaginary plane (11), and that the radial limitation (22) of the supporting bead (21) and the radial limitation (7) of the supporting projection (6) have the same first radial distance (8) from the axis (9).

2. Piston according to Claim 1, **characterized in that** the side of the seal ring (2) facing axially away from the chamber to be sealed (4) radially outside the supporting projection (6) takes the form essentially of an S shape with a first arc (13) axially adjoining the supporting projection (6) in the direction of the chamber to be sealed (4) and of a second arc (14) radially offset from the first arc (13).

3. Piston according to Claim 1 or 2, **characterized in that** the side of the seal ring (2) facing away from the chamber to be sealed (4) is free from sudden changes in direction.

4. Piston according to one of Claims 1 to 3, **characterized in that** the seal ring (2) has an essentially constant material thickness (15) radially outside the supporting projection (6).

5. Piston according to one of Claims 1 to 4, **characterized in that** the ratio of the radius (16) of the groove (5) to the radius (17) of the first arc (13) is 0.75 to 1.75.

6. Piston according to Claim 5, **characterized in that** the ratio is predominantly 1.

7. Piston according to one of Claims 1 to 6, **characterized in that** the supporting element (1) is made of a metallic material.

8. Piston according to one of Claims 1 to 7, **characterized in that** the seal ring (2) is made of a polymer material.

9. Piston according to one of Claims 1 to 8, **characterized in that** the supporting element (1) and the seal ring (2) are bonded together.

## Revendications

1. Piston complet avec un corps support (1) et une bague d'étanchéité (2) muni d'au moins une lèvre d'étanchéité (3), avec en outre les caractéristiques suivantes :
- le corps support (1) et la bague d'étanchéité (2) sont reliés l'un à l'autre,
- la bague d'étanchéité (2) forme à chaque fois, vue selon la coupe longitudinale du piston, une gorge (5) sensiblement en forme de C, ouverte dans la direction axiale en direction de l'espace (4) à rendre étanche, et
- le corps support (1) est muni d'une saillie d'appui (6) sous la forme d'une surface annulaire s'étendant radialement vers l'extérieur pour soutenir la bague d'étanchéité (2), **caractérisé en ce que** la saillie d'appui (6) est munie d'une délimitation radiale (7) présentant une première distance radiale (8) par rapport à l'axe (9) du piston, la première distance radiale (8) étant de la même taille qu'une seconde distance radiale (10) entre l'axe (9) et un plan imaginaire (11) s'étendant parallèlement à l'axe (9) et passant par le centre radial (12) de la gorge (5), la bague d'étanchéité (2) étant munie, sur le côté de la gorge (5) opposé à l'espace (4) à rendre étanche, d'un bourrelet support (21) dont la délimitation radiale (22), vue dans la direction radiale, se termine de niveau avec la délimitation radiale (7) de la saillie d'appui (6) et du plan imaginaire (11), et **en ce que** la délimitation radiale (22) du bourrelet support (21) présente, comme la délimitation radiale (7) de la saillie d'appui (6), la première distance radiale (8) par rapport à l'axe (9).

2. Piston selon la revendication 1, **caractérisé en ce que** le côté de la bague d'étanchéité (2) axialement opposé à l'espace (4) à rendre étanche présente, radialement à l'extérieur de la saillie d'appui (6), une forme sensiblement en S avec un premier arc (13) axialement adjacent, dans la direction de l'espace (4) à rendre étanche, à la saillie d'appui (6), et un second arc (14) décalé radialement par rapport au premier arc (13).

3. Piston selon l'une des revendications 1 ou 2, **caractérisé en ce que** le côté de la bague d'étanchéité (2) opposé à l'espace (4) à rendre étanche est exempt de changements de direction brusques.

4. Piston selon l'une des revendications 1 à 3, **caractérisé en ce que** la bague d'étanchéité (2) présente radialement, à l'extérieur de la saillie d'appui (6), une épaisseur de matière (15) sensiblement constante.

5. Piston selon l'une des revendications 1 à 4, **caractérisé en ce que** le rapport entre le rayon (16) de la gorge (5) et le rayon (17) du premier arc (13) est de 0,75 à 1,75.

6. Piston selon la revendication 5, **caractérisé en ce que** le rapport est sensiblement de 1.

7. Piston selon l'une des revendications 1 à 6, **caractérisé en ce que** le corps support (1) est réalisé en une matière métallique.

8. Piston selon l'une des revendications 1 à 7, **caractérisé en ce que** la bague d'étanchéité (2) est réalisée en une matière polymère.

9. Piston selon l'une des revendications 1 à 8, **caractérisé en ce que** le corps support (1) et la bague d'étanchéité (2) sont fixés l'un sur l'autre.
